# EUROPEAN PATENT APPLICATION

(11) **EP 4 513 769 A1**
(43) Date of publication of application: **26.02.2025**
(21) Application number: 23382862.3
(22) Date of filing: 22.08.2023
(51) Int. Cl.: H04B 3/54

(54) **CIRCUIT SYSTEM AND METHOD FOR OPERATING A CIRCUIT SYSTEM**

(71) Applicant: E.G.O. Elektro-Gerätebau GmbH, 75038 Oberderdingen (DE)
(72) Inventor: Torres, Toni, 08185 Llicà de Vall (ES); Mañan Canyelles, Jose, 08185 Llicà de Vall (ES)
(74) Representative: Patentanwälte Ruff, Wilhelm, Beier, Dauster & Partner mbB

(57) **Abstract**

A circuit system for transferring signals or energy from a DC-side to an AC-side comprises a full bridge rectifier having an AC-side and a DC-side with two pairs of diodes connected in parallel, each pair of diodes comprising a lower diode and an upper diode connected in series. A load resistor is provided with one of its ends being connected to the AC-side of the full bridge rectifier between one of the pairs of diodes, and the other end being connected to an auxiliary DC-voltage source having a ground potential. A voltage signal generating means generates a voltage signal to be supplied by the auxiliary DC-voltage source to the load resistor in accordance to signals or to an amount of energy to be transferred to the AC-side or from the AC-side to the DC-side of the full bridge rectifier. A voltage signal evaluating means extracts the signals or the amount of energy from the voltage at the load resistor during a predetermined time interval when the lower diode connected to the load resistor is in a conducting state such that the AC-side and the DC-side temporarily have the same ground potential.

## Description

### TECHNICAL FIELD AND PRIOR ART

The invention is directed to a circuit system for transferring signals or data information and/or an amount of energy from a DC-side to an AC-side of the circuit system or from the AC-side to the DC-side. The invention is further directed to a method for operating a circuit system to transfer signals or data information and/or an amount of energy from a DC-side to an AC-side of the circuit system or from the AC-side to the DC-side, wherein the circuit system can preferably be one as named before.

### SUMMARY OF THE INVENTION

It is the object of the invention to provide a circuit system for transferring signals or data information and/or an amount of energy and a method for operating such a circuit system for in this way, wherein problems of the prior art can be avoided.

This object is solved by a circuit system with the features of claim 1 and by a method for operating such a circuit system with the features of claim 13. Advantageous and preferred configurations of the invention are the subject of the further claims and are explained in more detail below. Some of the features may be described only with regard to the circuit system or only with regard to the method. However, independent and regardless of this, they are intended to be able to apply by themselves for the circuit system and for the method for its operation independently of one another. The wording of the claims is made to the content of the description by means of express references.

A circuit system according to the invention, with which signals or data information and/or an amount of energy can be transferred from a DC-side to an AC-side of the circuit system or from the AC-side to the DC-side of the circuit system, comprises a full bridge rectifier having this AC-side and this DC-side. The full bridge rectifier is composed of two pairs of diodes connected in parallel, wherein each pair of diodes comprises a lower diode and an upper diode, which again are connected in series to each other. The circuit system also comprises load resistor, wherein one end of this load resistor is connected to the AC-side of the full bridge rectifier between the lower diode and the upper diode of one of the pairs of diodes mentioned before. Another end of the load resistor is connected to an auxiliary DC-voltage source, which has a ground potential that is the same as a ground potential of the DC-side of the full bridge rectifier. The circuit system also has a voltage signal generating means for generating a voltage signal, which voltage signal shall be supplied by the auxiliary DC-voltage source to the load resistor in accordance or corresponding to signals or data information and/or in accordance or corresponding to an amount of energy to be transferred to the AC-side of the full bridge rectifier. In similar manner, the voltage signal generating means can generate a voltage signal to be supplied by the AC-side to the load resistor in accordance or corresponding to signals or data information and/or in accordance or corresponding to an amount of energy to be transferred to the DC-side of the full bridge rectifier. A voltage signal evaluating means is present for extracting the signals or data information and/or the amount of energy from the voltage at the load resistor during a predetermined time interval when the lower diode that is connected to the load resistor is in a conducting state such that the AC-side and the DC-side temporarily have the same ground potential. This having the same ground potential allows for the transfer.

The invention allows for a transfer of data, signals or energy between two electronic circuits that have different references, without the need of isolation between these two circuits. One of them is an AC-side, and one is a DC-side, and the transfer direction can be either one between them. The invention is based on the fact that during the AC to DC rectification with a full bridge rectifier, there is a short time window corresponding to a transfer time when both circuits, DC and AC, are at the same potential due to the conduction time of the lower diodes. This time window may change based on a DC load consumption and the value of a rectification DC filter capacitor. For the rest of the cycle, when lower rectifier bridge diodes are not conducting, it is necessary to block the voltage between both circuits DC and AC, to avoid voltage coming from AC. This would be superposed on the DC voltage circuit with bad consequences. A drawback of the invention is that the time window for the transfer is short and not available all the time, but needs to be aligned with the conduction time of the lower diodes. The amount of data or energy to be transferred is restricted, too, of course. But this can be handled, and sometimes it is sufficient to transfer rather small amounts of data or energy.

The circuit system may further comprise a capacitor being connected in parallel to the load resistor mentioned before. It may also be provided and adapted for storing the amount of energy to be transferred to the AC-side or to the DC-side of the full bridge rectifier. This may help in a faster transfer.

In an embodiment of the invention the circuit system comprises an additional DC-voltage source for supplying a DC-voltage to the capacitor mentioned before. This may help in charging this capacitor.

In an even further embodiment, the circuit system may further comprise a second resistor connected in parallel to the DC-side. Its electrical resistance value, which may be in the range of 10kOhms to 50kOhms, determines the amount of the predetermined time interval for the transfer. In an alternative embodiment, its electrical resistance value could be even lower like 32 Ohms.

In one embodiment of the invention, the load resistor can be a thermally-sensitive resistor, being used as a temperature sensor. In this case, its temperature or the resistance value of it, respectively, may be the data to be transferred. The thermally-sensitive resistor can have a negative temperature coefficient being an NTC, which generally allows for good and exact temperature measurement.

Preferably, the load resistor can be adapted and provided for measuring an operation temperature of a TRIAC, alternatively an IGBT or any other such semiconductor power switch. This is a safety measure against the TRIAC heating up too much or coming close to causing damage to the surrounding or be damaged itself.

In a preferred embodiment of the invention, the circuit system can be adapted to transfer the signals, the data information and/or the amount of energy from the DC-side to the AC-side of the full bridge rectifier or from the AC-side to the DC-side without employment of any further means such as: an isolated transformer winding, an optocoupler, a capacitive isolator. This allows for a simplified circuit system.

In a further embodiment of the invention, the one end of the load resistor can be directly connected to a terminal which is provided between the lower diode and the upper diode of the one of the pairs of diodes of the rectifier. The load resistor may also be connected via a diode to the auxiliary DC-voltage source or to the data source, respectively.

In preferred manner, the voltage signal evaluating means can adapted to extract the data information by only measuring a voltage across an auxiliary resistor or from a voltage variable source connected in series to the load resistor or to the voltage variable source. This auxiliary resistor may again be connected in series to the load resistor. This may provide for an easy way to extract the data information.

In a preferred embodiment of the invention, the predetermined time interval mentioned above may have a duration of at least 1/33 of the period of the AC voltage input to the full bridge rectifier. This may preferably be at least 1/32, even more preferably at least 1/30, corresponding to at least 0,67 msec. The predetermined time interval mentioned above may in a specific embodiment even have a duration of 1/10 of the period of the AC voltage input. This may correspond to a time interval of 2 msec for an AC-period of 20 msec or 50Hz, respectively.

In a further embodiment of the invention, a variable voltage source can be connected to the AC-side having a resistor being connected in series such that a voltage across this resistor can depend on the value of the voltage of the variable voltage source again. This resistor can be an auxiliary resistor, in particular one as mentioned before. A current through such an auxiliary resistor, which is connected to the auxiliary DC-voltage source, can depend on the voltage of the variable voltage source. In consequence, the voltage of this variable voltage source is present at a capacity, which capacity is again connected in series with the auxiliary DC-voltage source and in parallel with the auxiliary resistor.

In a method according to the invention for operating a circuit system transferring signals or data information and/or an amount of energy from a DC-side to an AC-side or from an AC-side to a DC-side of the circuit system, a first or preceding step can be to provide a circuit system comprising a full bridge rectifier having an AC-side and a DC-side, preferably as described before. The system can be composed of two pairs of diodes being connected in parallel, wherein each pair of diodes comprises a lower diode and an upper diode, which diodes are connected in series. A load resistor is provided, wherein one end of the load resistor is connected to the AC-side of the full bridge rectifier between the lower diode and the upper diode of one of the pairs of diodes. Another end of the load resistor is connected to an auxiliary DC-voltage source, which auxiliary DC-voltage source has a ground potential being the same as a ground potential of the DC-side of the full bridge rectifier. A DC voltage signal is generated and supplied by the auxiliary DC-voltage source to the load resistor in accordance to signals or data information and/or an amount of energy that is to be transferred to the AC-side of the full bridge rectifier. Alternatively, an AC voltage signal is generated and supplied to the load resistor in accordance to signals or data information and/or an amount of energy to be transferred to the DC-side of the full bridge rectifier.

In the next step, the signals or the data information and/or the amount of energy is extracted from the voltage at the load resistor during a predetermined time interval when the lower diode connected to the load resistor is in its conducting state such that the AC-side and the DC-side temporarily have the same ground potential during the transfer time mentioned above. This has been described briefly before.

These and further features may be gathered from the claims and also from the description and the drawings, with the individual features being capable of being implemented in each case by themselves or severally in the form of sub-combinations in an embodiment of the invention and in other fields and being capable of constituting advantageous and independently patentable versions for which protection is claimed here. The subdivision of the application into individual sections and intermediate headings does not restrict the general validity of the statements made under these.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: a circuit system of the invention in a first simple embodiment,
- Fig. 2: a voltage between references points, AC and DC, and a "Transfer Time",
- Fig. 3: a circuit system of the invention in a second detailed embodiment,
- Fig. 4: a circuit system of the invention in a third detailed embodiment,
- Fig. 5: a voltage dependent system of the invention in a fourth embodiment.

### DETAILED DESCRIPTION OF EMBODIMENTS OF THE INVENTION

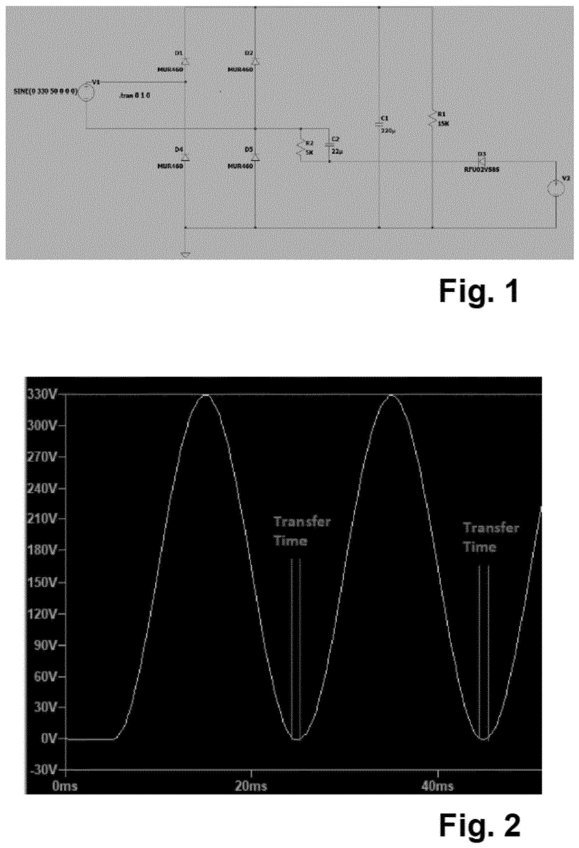

The invention of a circuit system in Fig. 1 shows two different electronic circuits with two separate references. These two electronic circuits involve an AC circuit with an AC voltage source, and a rectifier DC circuit from the AC main. DC circuit can also be varied, like having a filter option after rectification, and a DC power supply that will lower a filtered voltage value to a lower range. Fig. 1 is an implementation of a single phase full wave rectification with an additional filter as a topology according to the invention to send data from the DC side V2 to the AC side V1. V2 is the data DC source or the energy source that in the final application could be a microprocessor or any other electronic device that generates data or a signal, respectively, or that provides energy such as a transistor or the like. The values of the components are indicated in Fig. 1. Capacitor C2 could also be dispensed of, it is not absolutely necessary. It should only be used when also energy is to be transferred, and not only signals or data. It should be noted that to store the energy from DC in the AC side, the capacitor C2 is needed. The window time to transfer energy is limited to the time where D5 is on. Obviously C2 is needed to supply R2 when it is not possible to transfer energy from V2, because D5 is not conducting energy, so D5 is not inside the time slot window of the transfer time.

The principle is very similar to the one used to transmit signal or data, but in this case V2 is the power supply referenced to DC ground.

In case capacitor C2 is not present when only signals or data are to be transferred, R2 may have a value of only 1k. Another resistor should then be connected in line between D3 and V2, this resistor may have a value of about 1k.

The resistor R2 is the AC load where the data or energy will be transferred to.

Fig. 2 shows a sine wave of the voltage, indicating the short time interval as Transfer Time that has been mentioned before as transfer time, when the lower diode D5 is in a conducting state such that the AC-side and the DC-side temporarily have the same ground potential. One can take from Fig. 2 that the Transfer Time is quite short, for example only about 1 msec. If that time window is matched, it is possible to send any data or energy to a load referenced to the AC side or to the DC side as mentioned before.

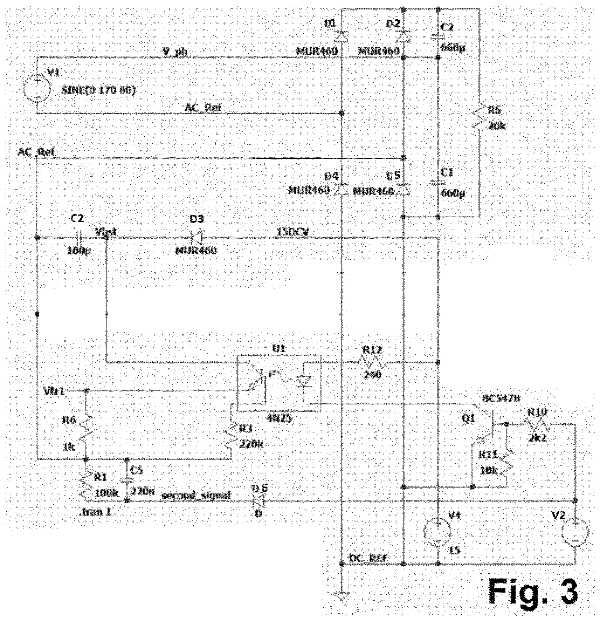

Fig. 3 shows a circuit system according to the invention in more detail. The main purpose of the optocoupler U1 (4N25) is to provide a voltage level, instead of pulses, to the AC side reference. The capacitor C2 is charged through D3 and may behave as a voltage supply between Vbst and AC_Ref. Then it is possible to send a voltage to R6 through optocoupler U1. Assuming the voltage in C2 is stable, then the voltage across R6 will be also stable, and controlled by optocoupler U1. The transistor BC547B as Q1 is a current driver for optocoupler U1.

The voltage source V2 is the control signal for optocoupler U1 and also for diode D6. So the voltage profile of V2 can be seen in the AC side on R6 and on R1. With the circuit system of Fig. 3, any data or energy can be sent from the DC side to the AC side.

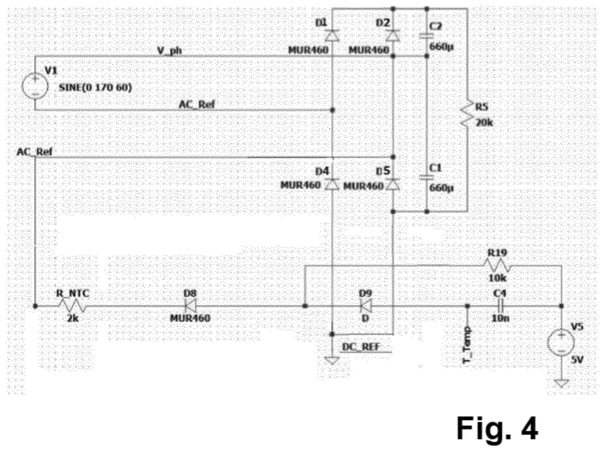

Fig. 4 shows an invention embodiment variant that allows to sense or read an NTC value that is referred to as AC reference circuit, from the DC circuit. The division between the voltage source V5 (= 5V) for R_NTC and the voltage source V4 (=15V) is similar to the previous ones, but has an impedance R19 inserted in between. So the voltage across V5 will be seen in R_NTC multiplied by the ratio R_NTC/(R_NTC+R19). Taking into consideration that R_NTC changes with temperature, because it is an NTC, then the voltage at T_Temp (that is related to DC_REF) will change proportional to variations of R_NTC. R_NTC can be any temperature measurement referred to AC_Ref. It may be provided next to a TRIAC for measuring and controlling its temperature. The main advantage is that it is possible to read an analog signal, which is the voltage across R_NTC, without the need for an optocoupler. The analog signal can be read with the circuit R_NTC, D8, D9, R19 and C4. The voltage across C4, (referred to as DC_REF) is proportional to the voltage across R_NTC.

When D5 is conducting, which happens every 16,7 msec or 20 msec, then C2 is connected to 15V DC and is being charged. R5 defines the Transfer Time of D5 and the duration of charging C2. With the circuit system of Fig. 4, only data but no energy can be sent from the AC side to the DC side via R_NTC.

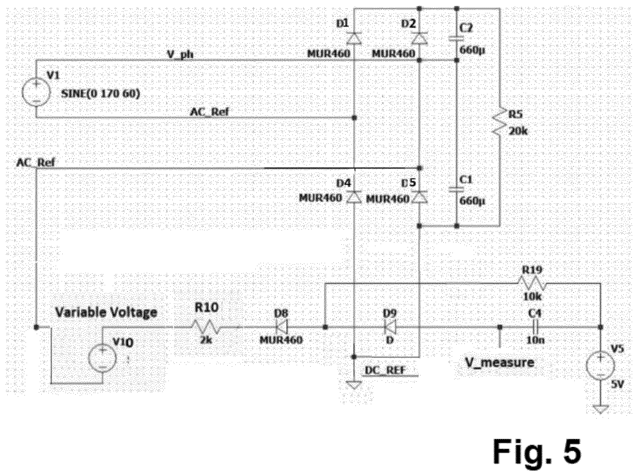

Fig. 5 shows a similar circuit system that can be used to read a variable voltage referred to AC_Ref. The voltage across R10 will depend on the value of the voltage of V10, therefore the current through R19 will depend on the voltage V10. By measuring the voltage at point V_measure on the right side, it is possible to determine the voltage value of V10.

With the circuit system of Fig. 5, only data but no energy can be sent from the AC side to the DC side via the variable voltage at V10.

## Claims

1. Circuit system for transferring signals or data information and/or an amount of energy from a DC-side to an AC-side of the circuit system or from the AC-side to the DC-side of the circuit system, comprising:
- a full bridge rectifier (D1, D2, D4, D5) having an AC-side (V1+, V1-; V_ph, AC_Ref) and a DC-side and being composed of two pairs of diodes connected in parallel, each pair of diodes comprising a lower diode (D4, D5) and an upper diode (D1, D2) connected in series;
- a load resistor (R2; R_NTC),
∘ one end of the load resistor (R2; R_NTC) being connected to the AC-side (V1-; AC_Ref) of the full bridge rectifier between the lower diode (D5) and the upper diode (D2) of one of the pairs of diodes, and
∘ another end of the load resistor (R2; R_NTC) being connected to an auxiliary DC-voltage source (V2; V5) having a ground potential (V2-; DC_REF) being the same as a ground potential (V2-; DC_REF) of the DC-side of the full bridge rectifier;
- a voltage signal generating means for generating a voltage signal to be supplied by the auxiliary DC-voltage source (V2; V5) to the load resistor (R2; R_NTC) in accordance to signals or data information and/or an amount of energy to be transferred to the AC-side of the full bridge rectifier or for generating a voltage signal to be supplied by the AC-side of the full bridge rectifier to the load resistor (R2; R_NTC) in accordance to signals or data information and/or an amount of energy to be transferred to the DC-side of the full bridge rectifier;
- a voltage signal evaluating means for extracting the signals or data information and/or the amount of energy from the voltage at the load resistor (R2; R_NTC) during a predetermined time interval when the lower diode (D5) connected to the load resistor (R2; R_NTC) is in a conducting state such that the AC-side and the DC-side temporarily have the same ground potential (AC_Ref, DC_REF).

2. Circuit system according to claim 1, further comprising a capacitor (C2) which is connected in parallel to the load resistor (R2) and which is provided and adapted for storing the amount of energy to be transferred to the AC-side or to the DC-side of the full bridge rectifier.

3. Circuit system according to claim 2, wherein the circuit system further comprises an additional DC-voltage source (V4) for supplying a DC-voltage to the capacitor (C2).

4. Circuit system according to one of the preceding claims, wherein the circuit system further comprises a second resistor (R5) connected in parallel to the DC-side, the electrical resistance (R5) of which determines the amount of the predetermined time interval.

5. Circuit system according to one of the preceding claims, wherein the load resistor (R_NTC) is a thermally-sensitive resistor, preferably having a negative temperature coefficient.

6. Circuit system according to one of the preceding claims, wherein the load resistor (R_NTC) is adapted and provided for measuring an operation temperature of a TRIAC.

7. Circuit system according to one of the preceding claims, wherein the circuit system is adapted to transfer the data information and/or the amount of energy from the DC-side to the AC-side of the full bridge rectifier without employment of any one of an isolated transformer winding, an optocoupler, and a capacitive isolator.

8. Circuit system according to one of the preceding claims, wherein the one end of the load resistor (R2; R_NTC) is directly connected to a terminal provided between the lower diode (D5) and the upper diode (D2).

9. Circuit system according to one of the preceding claims, wherein the load resistor (R2; R_NTC) is connected via a diode (D3; D8) to the auxiliary DC-voltage source (V2; V5).

10. Circuit system according to one of the preceding claims, wherein the voltage signal evaluating means is adapted to extract the data information by only measuring a voltage across an auxiliary resistor (R10; R19) or from a voltage variable source connected in series to the load resistor (R_NTC) or to the voltage variable source (V10).

11. Circuit system according to one of the preceding claims, wherein the predetermined time interval has a duration of at least 1/33, preferably at least 1/32, in particular at least 1/30 of the period of the AC voltage input to the full bridge rectifier.

12. Circuit system according to one of the preceding claims, wherein a variable voltage source (V10) is connected to the AC-side and has a resistor (R10) connected in series such that a voltage across this resistor (R10) depends on the value of the voltage of the variable voltage source (V10), wherein a current through an auxiliary resistor (R19) connected to the auxiliary DC-voltage source (V5) depends on the voltage of the variable voltage source (V10), so the voltage of the variable voltage source (V10) is present at a capacity connected in series with the auxiliary DC-voltage source (V5) and in parallel with the auxiliary resistor (R19).

13. Method for operating a circuit system transferring signals or data information and/or an amount of energy from a DC-side to an AC-side of the circuit system or from the AC-side to the DC-side, in particular with a circuit system according to one of the preceding claims, the method comprising the steps of:
- providing the circuit system comprising a full bridge rectifier (D1, D2, D4, D5) having an AC-side (V1+, V1-; V_ph, AC_Ref) and a DC-side and being composed of two pairs of diodes connected in parallel, each pair of diodes comprising a lower diode (D4, D5) and an upper diode (D1, D2) connected in series; a load resistor (R2; R_NTC), one end of the load resistor (R2; R_NTC) being connected to the AC-side (V1-; AC_Ref) of the full bridge rectifier between the lower diode (D5) and the upper diode (D2) of one of the pairs of diodes, and another end of the load resistor (R2; R_NTC) being connected to an auxiliary DC-voltage source (V2; V5) having a ground potential (V2-; DC_REF) being the same as a ground potential (V2-; DC_REF) of the DC-side of the full bridge rectifier;
- generating a DC voltage signal and supplying it by the auxiliary DC-voltage source (V2; V5) to the load resistor (R2; R_NTC) in accordance to signals or data information and/or an amount of energy to be transferred to the AC-side of the full bridge rectifier or generating an AC voltage signal and supplying it to the load resistor (R2; R_NTC) in accordance to signals or data information and/or an amount of energy to be transferred to the DC-side of the full bridge rectifier and
- extracting the data information and/or the amount of energy from the voltage at the load resistor (R2; R_NTC) during a predetermined time interval when the lower diode (D5) connected to the load resistor (R2; R_NTC) is in its conducting state such that the AC-side and the DC-side temporarily have the same ground potential (AC_Ref, DC_REF).

## Amended claims

### Amended claims in accordance with Rule 137(2) EPC.

1. Circuit system for transferring signals or data information or an amount of energy from a DC-side to an AC-side of the circuit system or from the AC-side to the DC-side of the circuit system, comprising:
- a full bridge rectifier (D1, D2, D4, D5) having an AC-side (V1+, V1-; V_ph, AC_Ref) and a DC-side and being composed of two pairs of diodes connected in parallel, each pair of diodes comprising a lower diode (D4, D5) and an upper diode (D1, D2) connected in series;
- a load resistor (R2; R_NTC),
∘ one end of the load resistor (R2; R_NTC) being connected to the AC-side (V1-; AC_Ref) of the full bridge rectifier between the lower diode (D5) and the upper diode (D2) of one of the pairs of diodes, and
∘ another end of the load resistor (R2; R_NTC) being connected to an auxiliary DC-voltage source (V2; V5) having a ground potential (V2-; DC_REF) being the same as a ground potential (V2-; DC_REF) of the DC-side of the full bridge rectifier;
- a voltage signal generating means for generating a voltage signal to be supplied by the auxiliary DC-voltage source (V2; V5) to the load resistor (R2; R_NTC) in accordance to signals or data information or an amount of energy to be transferred to the AC-side of the full bridge rectifier or for generating a voltage signal to be supplied by the AC-side of the full bridge rectifier to the load resistor (R2; R_NTC) in accordance to signals or data information or an amount of energy to be transferred to the DC-side of the full bridge rectifier;
- a voltage signal evaluating means for extracting the signals or data information or the amount of energy from the voltage at the load resistor (R2; R_NTC) during a predetermined time interval when the lower diode (D5) connected to the load resistor (R2; R_NTC) is in a conducting state such that the AC-side and the DC-side temporarily have the same ground potential (AC_Ref, DC_REF).

2. Circuit system according to claim 1, wherein the circuit system is adapted for transferring an amount of energy from a DC-side to an AC-side of the circuit system or from the AC-side to the DC-side of the circuit system, the circuit system further comprising for storing the amount of energy to be transferred to the AC-side or to the DC-side of the full bridge rectifier a capacitor (C2), said capacitor (C2) being connected in parallel to the load resistor (R2) and which is provided and adapted.

3. Circuit system according to claim 2, wherein the circuit system further comprises an additional DC-voltage source (V4) for supplying a DC-voltage to the capacitor (C2).

4. Circuit system according to one of the preceding claims, wherein the circuit system further comprises a second resistor (R5) connected in parallel to the DC-side, the electrical resistance (R5) of which determines the amount of the predetermined time interval.

5. Circuit system according to one of the preceding claims, wherein the load resistor (R_NTC) is a thermally-sensitive resistor, preferably having a negative temperature coefficient.

6. Circuit system according to one of the preceding claims, wherein the load resistor (R_NTC) is adapted and provided for measuring an operation temperature of a TRIAC.

7. Circuit system according to one of the preceding claims, wherein the circuit system is adapted to transfer the data information or the amount of energy from the DC-side to the AC-side of the full bridge rectifier without employment of any one of an isolated transformer winding, an optocoupler, and a capacitive isolator.

8. Circuit system according to one of the preceding claims, wherein the one end of the load resistor (R2; R_NTC) is directly connected to a terminal provided between the lower diode (D5) and the upper diode (D2).

9. Circuit system according to one of the preceding claims, wherein the load resistor (R2; R_NTC) is connected via a diode (D3; D8) to the auxiliary DC-voltage source (V2; V5).

10. Circuit system according to one of the preceding claims, wherein the voltage signal evaluating means is adapted to extract the data information by only measuring a voltage across an auxiliary resistor (R10; R19) or from a voltage variable source connected in series to the load resistor (R_NTC) or to the voltage variable source (V10).

11. Circuit system according to one of the preceding claims, wherein the predetermined time interval has a duration of at least 1/33 of the period of the AC voltage input to the full bridge rectifier.

12. Circuit system according to one of the preceding claims, wherein a variable voltage source (V10) is connected to the AC-side and has a resistor (R10) connected in series such that a voltage across this resistor (R10) depends on the value of the voltage of the variable voltage source (V10), wherein a current through an auxiliary resistor (R19) connected to the auxiliary DC-voltage source (V5) depends on the voltage of the variable voltage source (V10), so the voltage of the variable voltage source (V10) is present at a capacity connected in series with the auxiliary DC-voltage source (V5) and in parallel with the auxiliary resistor (R19).

13. Method for operating a circuit system transferring signals or data information or an amount of energy from a DC-side to an AC-side of the circuit system or from the AC-side to the DC-side, in particular with a circuit system according to one of the preceding claims, the method comprising the steps of:
- providing the circuit system comprising a full bridge rectifier (D1, D2, D4, D5) having an AC-side (V1+, V1-; V_ph, AC_Ref) and a DC-side and being composed of two pairs of diodes connected in parallel, each pair of diodes comprising a lower diode (D4, D5) and an upper diode (D1, D2) connected in series; a load resistor (R2; R_NTC), one end of the load resistor (R2; R_NTC) being connected to the AC-side (V1-; AC_Ref) of the full bridge rectifier between the lower diode (D5) and the upper diode (D2) of one of the pairs of diodes, and another end of the load resistor (R2; R_NTC) being connected to an auxiliary DC-voltage source (V2; V5) having a ground potential (V2-; DC_REF) being the same as a ground potential (V2-; DC_REF) of the DC-side of the full bridge rectifier;
- generating a DC voltage signal and supplying it by the auxiliary DC-voltage source (V2; V5) to the load resistor (R2; R_NTC) in accordance to signals or data information or an amount of energy to be transferred to the AC-side of the full bridge rectifier or generating an AC voltage signal and supplying it to the load resistor (R2; R_NTC) in accordance to signals or data information or an amount of energy to be transferred to the DC-side of the full bridge rectifier and
- extracting the data information or the amount of energy from the voltage at the load resistor (R2; R_NTC) during a predetermined time interval when the lower diode (D5) connected to the load resistor (R2; R_NTC) is in its conducting state such that the AC-side and the DC-side temporarily have the same ground potential (AC_Ref, DC_REF).
